# EUROPEAN PATENT APPLICATION

(11) **EP 2 129 021 A1**
(43) Date of publication of application: **02.12.2009**
(21) Application number: 08710740.5
(22) Date of filing: 04.02.2008
(51) Int. Cl.: H04J 11/00, H04Q 7/36

(54) **WIRELESS COMMUNICATION SYSTEM, BASE STATION, TERMINAL DEVICE, AND WIRELESS COMMUNICATION METHOD**

(30) Priority: 20.03.2007 JP 2007071874
(71) Applicant: Mitsubishi Electric Corporation, Chiyoda-ku Tokyo 100-8310 (JP)
(72) Inventor: FUKUI, Noriyuki, Tokyo 100-8310 (JP)
(74) Representative: Pfenning, Meinig & Partner GbR
(86) International application number: PCT/JP2008/051761
(87) International publication number: WO 2008/114541

(57) **Abstract**

In a communication system in which a communication is performed between a base station and one or more terminals by using one or more communication channels, a control clement unit is defined by T OFDM symbols and F subcarriers. A second combination of T and F is determined for a first combination of T and F such that the numbed of modulation symbols (one OFDM symbol × one subcarrier) included in the control element unit defined by the second combination is closest to the number of modulation symbols included in the control element unit defined by the first combination.

## Description

### TECHNICAL FIELD

The present invention relates to a communication system in which communication is performed between a base station and one or more terminals by using one or more communication channels.

### BACKGROUND ART

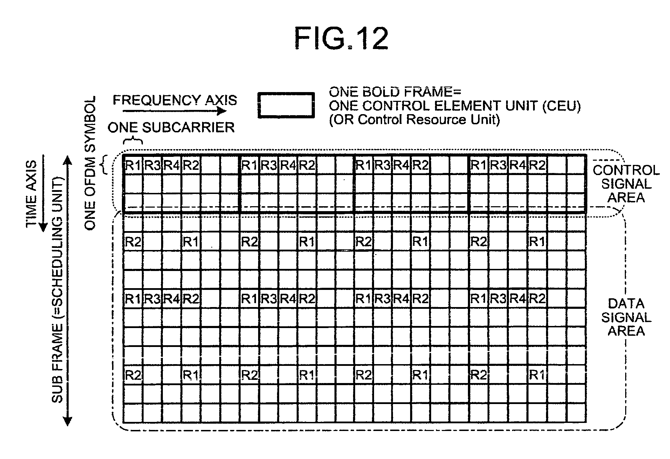

At present, 3GPP (3rd Generation Partnership Project), which is a standards body, performs a standardizing task of a wireless network adopting a new wireless system under the name of LTE (Long Term Evolution). This wireless system adopts OFDM (Orthogonal Frequency Division Multiple Access) for a downlink (direction from a base station to a terminal) and defines a plurality of communication channels and control channels on a frequency axis. Fig. 12 depicts the state of definition. An operation for allocating a wireless channel to a terminal, that is, so-called scheduling, is performed in units of subframes composed of 14 OFDM symbols. In these units, first three OFDM symbols can be used as a control signal area and the remaining OFDM symbols can be used as a data signal area. The three OFDM symbols are not always limited in use to the control signal area, and it is permitted that only one OFDM symbol or only two OFDM symbols are used as the control signal area. In this case, the remaining 13 or 12 OFDM symbols can be used as the data signal area.

As a content of the control signal, information as to which portion of a downlink data signal area (see Fig. 12) is allocated to a target terminal or which portion of a data signal area (not shown) of an uplink (direction from the terminal to the base station) is allocated to the target terminal is written. Thus, each terminal needs to periodically monitor the control signal area. On the control signal area, control signals destined for a plurality of terminals are simultaneously carried, and as a result, the terminal needs to operate to receive a plurality of control channels and detect the control signal destined for itself among the control signals. The LTE defines a unit that is called a control channel element (hereinafter, CCE). One control channel is configured by combining one or more of the units.

Further, the CCE can be divided into a lower constituent element, that is, a control element unit (hereinafter, CEU) configured by a plurality of adjacent subcarriers. In Nonpatent Document 1, for example, the definition for a unit equivalent to the CEU ("control resource unit") is disclosed. The definition is shown in Fig. 12 for reference. This conventional technique describes only a case that three OFDM symbols are used as a control signal area. Positions of pilot signals indicated by R1 to R4 were later partially modified from those of Fig. 12.

Nonpatent Literature 1: "Downlink L1/L2" Control Signaling: Multiplexing, Configuration and Logical Receiver Model", 3GPP Contribution R1-070930, Chapter 2.1, p. 1-2

### DISCLOSURE OF INVENTION

### PROBLEM TO BE SOLVED BY THE INVENTION

The above conventional technique describes the definition of the CEU (in Nonpatent Document, it is called "control resource unit") in which only three OFDMA symbols are used, and has no mention of other cases. The present invention is directed to perform CEU definition in the remaining cases, and an object of the invention is to harmonize among various cases of respective number of OFDM symbols to be used.

### MEANS FOR SOLVING PROBLEM

The present invention is for a wireless communication system in which a base station notifies one or more terminal devices of a control signal for each subframe defined by a number of OFDM symbols that is a unit in a time axis direction and a number of subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe. The wireless communication system includes a control-element-unit defining unit that defines, taking an integer F as an integral multiple of A, a control element unit that is a first unit of a constituent element of a control channel through which the base station transmits the control signal by T OFDM symbols and F subcarriers, and for a first combination of T and F, determines a second combination of T and F such that a number of modulation symbols included in the control element unit defined by the second combination is closest to a number of modulation symbols included in the control element unit defined by the first combination.

### EFFECT OF THE INVENTION

According to the present invention, a frequency width of a control element unit (CEU) in any number of OFDM symbols to be used is set to an integral multiple of a repetition cycle of a reference signal, and thus there is an effect that the demodulation performance in a terminal remains the same regardless of the number of OFDM symbols in the CEU.

### BRIEF DESCRIPTION OF DRAWINGS

[Fig. 1] Fig. 1 is an explanatory diagram of subframes according to a first embodiment of the present invention.
[Fig. 2] Fig. 2 is an explanatory diagram of control channel candidates according to the first embodiment of the present invention.
[Fig. 3] Fig. 3 is an explanatory diagram of a control channel element according to the first embodiment of the present invention.
[Fig. 4] Fig. 4 is an explanatory diagram of the control channel element according to the first embodiment of the present invention.
[Fig. 5] Fig. 5 is an explanatory diagram of a control element unit according to the first embodiment of the present invention.
[Fig. 6] Fig. 6 is an explanatory diagram of a communication system according to the first embodiment of the present invention.
[Fig. 7] Fig. 7 is an explanatory diagram of a non-transmission modulation symbol according to a second embodiment of the present invention.
[Fig. 8] Fig. 8 is an explanatory diagram of the non-transmission modulation symbol according to the second embodiment of the present invention.
[Fig. 9] Fig. 9 is an explanatory diagram of a control element unit according to a third embodiment of the present invention.
[Fig. 10] Fig. 10 is an explanatory diagram of a configuration of a control element channel according to the third embodiment of the present invention.
[Fig. 11] Fig. 11 is an explanatory diagram of a configuration of the control element channel according to the third embodiment of the present invention.
[Fig. 12] Fig. 12 is an explanatory diagram of subframes according to a background technique.

### EXPLANATIONS OF LETTERS OR NUMERALS

- 100: base station
- 101: buffer unit
- 102: scheduler unit
- 103: data encoding/modulating unit
- 104: CCE deciding unit
- 105: control-signal generating unit
- 106: OFDM mapping unit
- 107: transmitting unit
- 108: receiving unit
- 109: received-signal determining unit
- 110: control-information analyzing unit
- 111: demodulating/decoding unit
- 112: ACK/NACK generating unit
- 200: terminal
- 201: receiving unit
- 202: CCE-number determining unit
- 203: control-signal decoding/detecting unit
- 204: demodulating/decoding unit
- 205: control unit
- 206: ACK/NACK generating unit
- 207: data encoding/modulating unit
- 208: buffer unit
- 209: allocation requesting unit
- 210: signal multiplexing/selecting unit
- 211: downstream-quality measuring unit
- 212: transmitting unit

### BEST MODE(S) FOR CARRYING OUT THE INVENTION

### First embodiment.

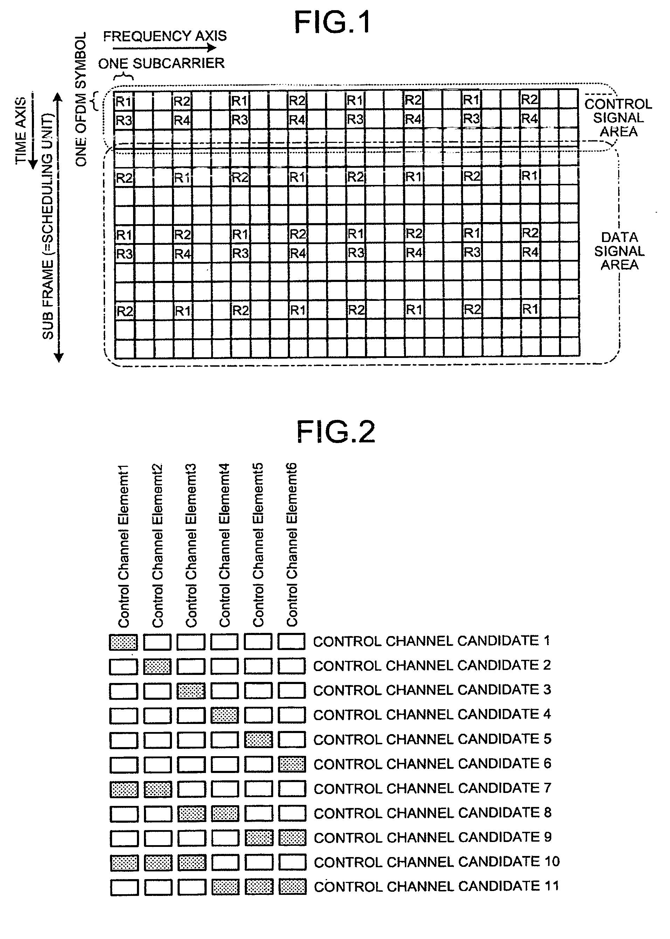

A first embodiment is described with reference to Fig. 1 to Fig. 6, and a basic operation of a wireless communication method used in this embodiment is described first. The basic operation has a content that complies with a wireless communication method for which a standardizing task is performed under the name of LTE (Long Term Evolution) in 3GPP (3rd Generation Partnership Project), which is a standards body.

A wireless system used in the first embodiment adopts an orthogonal frequency division multiple access (hereinafter, OFDMA) for a downlink (direction from a base station to a terminal), and defines a plurality of communication channels and control channels on a frequency axis.

Fig. 1 depicts the state of definition. An operation for allocating a wireless channel to a terminal, that is, so-called scheduling, is performed in units of subframes composed of 14 OFDM symbols. In these units, first three OFDM symbols can be used as a control signal area and the remaining OFDM symbols can be used as a data signal area. The three OFDM symbols are not always limited in use to the control signal area, and it is permitted that only the one OFDM symbol or only the two OFDM symbols are used as the control signal area. In this case, the remaining 13 or 12 OFDM symbols can be used as the data signal area. Modulation symbols (configured by a 1-subcarrier region and a 1-OFDM-symbol region) denoted as R1 to R4 in Fig. 1 are locations in which prescribed bit patterns, so-called pilot signals, are input. In the LTE, the pilot signal is called "reference signal". Accordingly, the modulation symbol can not be used for transmitting the control signal or the data signal. Moreover, the modulation symbol is often called "resource element". In the present invention, the modulation symbol allocated with the pilot signal and the "reference signal" carry the same meaning. The modulation symbol allocated with the pilot signal is a pilot symbol in the present invention.

The reference signal, which is a prescribed signal pattern, enables estimation of a transmission channel state from a signal change upon reception, and is finally utilized for a demodulating operation of the control signal or the data signal. Numeric portions of R1 to R4 are mapped with a plurality of transmitting antenna numbers of the base station in a one-to-one correspondence, and R1 to R4 are each reference signal transmitted from the antennas 1 to 4. There is a case that the number of transmitting antennas is less than four. In this case, the part of Rn (n=2 or 3 or 4) corresponding to the missing antenna can transmit the data signal or the control signal without transmitting the reference signal.

As a content of the control signal, information as to which portion of the downlink data signal area (see Fig. 1) is allocated to the target terminal or which portion of the data signal area (not shown) of the uplink (direction from the terminal to the base station) is allocated to the target terminal is written. Thus, each terminal needs to periodically monitor the control signal area to know whether each terminal itself is allocated, and if so, which portion of the data signal area is allocated. On the control signal area, control signals destined for a plurality of terminals are simultaneously carried, and as a result, the terminal needs to so operate as to receive a plurality of control channels and detect the control signal destined for itself among the control signals. Each terminal is notified of a plurality of control channel candidates to be received in advance from the network side (the candidates are probably different depending on each terminal). Fig. 2 depicts the state of notifying control channel candidates.

LTE defines a unit that is called a control channel element (hereinafter, "CCE"). When one of the units is used or two or more thereof are combined, one control channel is configured. In an example of Fig. 2, the number of control channel candidates to be received by a certain terminal is set to 11. In the candidates 1 to 6, one CCE configures a control channel; in the candidates 7 to 9, two CCEs do the same; and in the candidates 10 and 11, the three CCEs do the same. The CCE is a control channel element in the present invention.

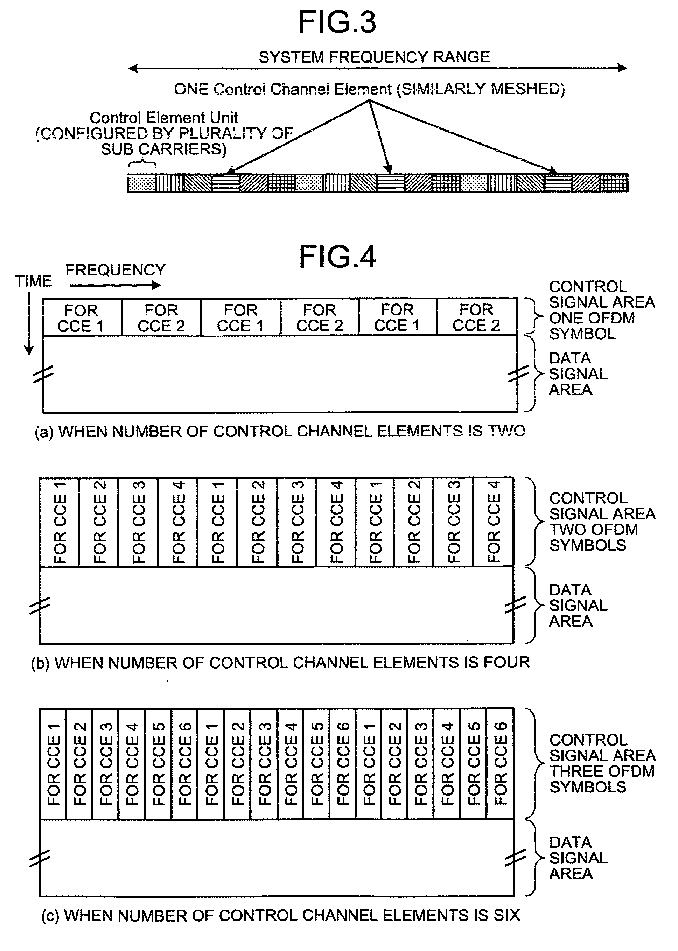

While Fig. 2 gives an impression that one unit in which subcarriers physically adjacent to one another are gathered configures one CCE, this is not always the case in practice. It is predicted that a plurality of smaller blocks are collected to configure one CCE. Fig. 3 depicts the state of configuring one CCE. Upon considering a case that a wireless environment is worsened at a specific small frequency range, if the control channel is transmitted only over that frequency range, a receiving quality at the terminal strongly depends on that specific wireless environment. However, when a plurality of small frequency ranges apart from one another on the frequency axis are collected and used, the dependency on the wireless environment over the specific frequency range is decreased, and thus it is possible to expect the effect of receiving quality stabilization (frequency diversity effect). In this case, the small block configuring the CCE is defined as a control element unit (hereinafter, "CEU").

The number of CCEs present in one subframe is notified to the terminal. In examples of Fig. 4, the numbers of CCEs in one subframe are two, four, and six, respectively. According to the number of CCEs in the subframe, positions of CCEs are previously decided, and as a result, the terminal to which the number of CUES is notified can specify the positions of CCEs, that is, (a), (b), or (c) as in the examples of Fig. 4.

The relation between each of the units is described orderly as follows.
· Plurality of adjacent subcarriers → control element unit (CEU)
· Predetermined number of CEUs not always adjacent → control channel element (CCE)
· At least one CCE → control channel

The number of subcarriers is set forth according to a system bandwidth, for example, ranging from 72 subcarriers in a system bandwidth of 1.25 megahertz to 1200 subcarriers in a system bandwidth of 20 megahertz. Based on the relation, it can be said that the both CEU and CCE are constituent elements of the control channel. The CEU is a first constituent element of the control channel in the present invention, and the CCE is a second constituent element in the present invention.

A characteristic of the present embodiment is described below. In this embodiment, a definition of the control element unit (CEU) when the number of OFDM symbols is other than three, particularly when it is one or two, is described.

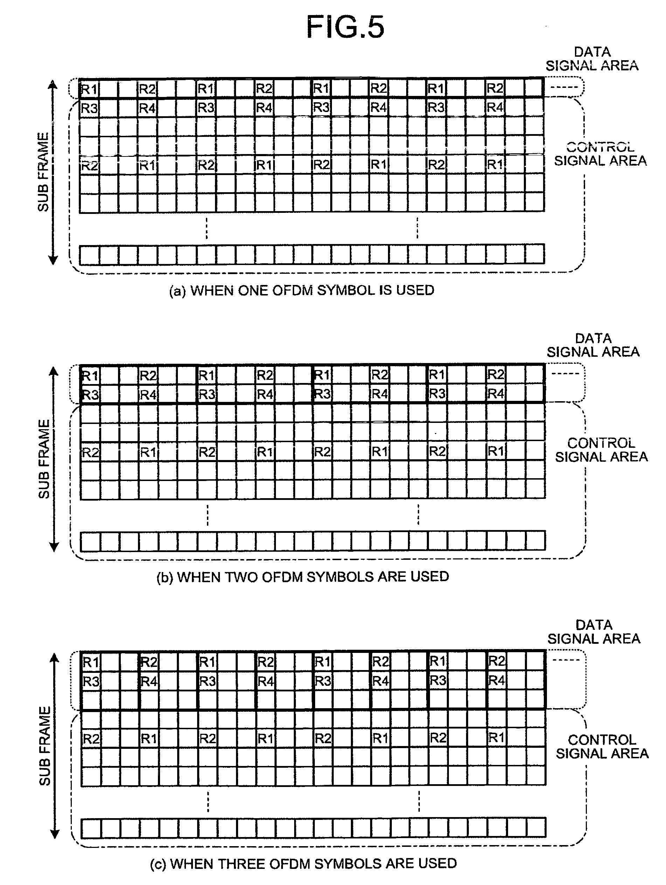

Fig. 5 is a definition example of CEUs of which the number is matched to that of OFDM symbols to be used in the control signal area. A portion indicated by a bold frame is one CEU. The hollowing points (1) and (2) are noteworthy.
(1) In any numbers of OFDM symbols to be used, a frequency width of the CEU is an integral multiple of a repetition cycle of a reference signal. That is, in a case that one OFDM symbol is used in Fig. 5(a), the frequency width is two times the R1 cycle or four times an R1-to-R2 interval; in a case that two OFDM symbols are used in Fig. 5(b), the frequency width is one time the R1 cycle or two times the R1-to-R2 interval; and in a case that three OFDM symbols are used in Fig. 5(c), the frequency width is one time the R1-to-R2 interval.
(2) Even when the number of OFDM symbols to be used increases, the frequency width is so adjusted that the number of configuring modulation symbols of CEU is not greatly differed. That is, in a case that one OFDM symbol is used in Fig. 5(a), there are 12 subcarriers. On the other hand, in a case that the two OFDM symbols are used in Fig. 5(b), there are six subcarriers, and in a case that the three OFDM symbols are used in Fig. 5(c), there are three subcarriers. Upon selection of the number of subcarriers, the number of modulation symbols (hereinafter, "effective modulation symbol") other than the reference signal (R1 to R4) is occasionally considered.

When the (1) is implemented, any CEU provides the same positional relation between modulation symbol carried thereon with the control signal and the symbols of reference signals (R1 and R2 or R1 to R4). Accordingly, in view of performing a demodulation of the control signal based on a transmission channel state presumed from the reference signal, an effect that the demodulation performance remains the same even when any CEU is used is provided. This eliminates necessity of considering as to which CEU is used when the base station transmits the control signal, and thus the process can be simplified. Moreover, an error rate of control signal has a specific target value, and thus taking into account that control is performed in order that the respective CCEs (that is, CEUs) are brought close to the target value, equality in demodulation performance between the CEUs is very important in terms of process simplification.

When the (2) is implemented, it becomes possible to sufficiently increase the number of CEUs configuring the CCE even when the number of OFDM symbols to be used is changed. Thus, it is possible to bring out the frequency diversity effect described above.

In the present embodiment, the (1) and (2) are both established, and when three subcarriers (between R1 to R2 or minimum repetition unit) are applied during the use of the three OFDM symbols of Fig. 5(c) to achieve one CEU = nine modulation symbols, the six subcarriers are adopted such that 12 modulation symbols closest to the nine modulation symbols are achieved while maintaining the repetition during the use of the two OFDM symbols of Fig. 5(b). Likewise, also during the use of the one OFDM symbol of Fig. 5(a), 12 subcarriers are adopted such that 12 modulation symbols close to the nine modulation symbols are achieved.

The following is a summary of CEU sizes (number of modulation symbols) and the number of effective modulation symbols of Figs. 5(a) to (c).
(a) During use of one OFDM symbol: CEU size =12, number of effective modulation symbols =8
(b) During use of two OFDM symbols: CEU size =12, number of effective modulation symbols =8
(c) During use of three OFDM symbols: CEU size =9, number of effective modulation symbols =7
   When the six subcarriers are adopted during the use of the one OFDM symbol in (a), the CEU size is six modulation symbols, and thus the difference from the nine modulation symbols is the same as 12 modulation symbols in a case of 12 subcarriers, and the number of effective modulation symbols, however, is four. Thus, the difference from (c) during the use of the three OFDM symbols becomes large.

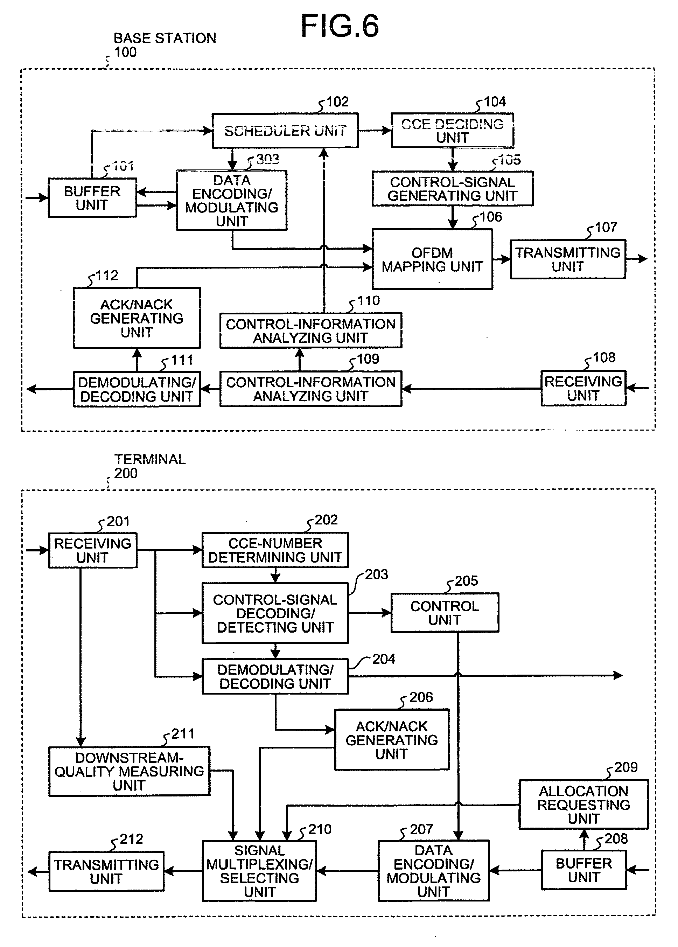

Fig. 6 is a configuration diagram of a communication system that performs a characteristic operation of the subject application. This configuration is also applied to the following embodiments including a second embodiment.
In Fig. 6, reference numeral 100 denotes a base station device and 200 denotes a terminal device (terminal). Reference numeral 101 denotes a buffer unit that accumulates downstream data. From this element, an accumulated data amount destined for each terminal is passed on to a scheduler unit 102. The scheduler unit performs scheduling where which wireless channel is allocated to which terminal is decided so that allocation of the data signal area to each terminal is decided. Scheduling information is sent to a data encoding/modulating unit 103, and the data encoding/modulating unit pulls out a necessary data amount from the buffer unit 101 to perform encoding/modulating. The scheduling information is also notified to a CCE deciding unit 104 at which the required number of CCEs and the CCE (that is, CEU) used for each terminal are decided from the number of terminals scheduled. In a control-signal generating unit 105, a control signal is generated by using an appropriate encoding/modulating technique for each terminal. An OFDM mapping unit 106 maps the encoded/modulated data signal and control signal to a frequency axis and a time axis. Thereafter, a transmitting unit 107, which upconverts the signal to a wireless frequency, transmits the upconverted signal.
In the above explanations, the OFDM mapping unit 106 decides the configuration of the CEU as shown in Fig. 5 by an instruction from the CCE deciding unit. The OFDM mapping unit 106 is a control-element-unit defining unit and the operation of the OFDM mapping unit 106 is a control-element-unit defining step in the present invention.

A signal received at a receiving unit 108 is distinguished into the control signal and the upstream data signal at a received-signal determining unit 109 by using previously decided use-frequency information and use-time information of each signal. A control-information analyzing unit 110 distinguishes the control signal into an upstream resource allocation request, downlink quality information, and ACK/NACK information, and notifies each of these to the scheduler unit 102. All of these pieces of information are necessary for scheduling. The upstream data signal is processed at a demodulating/decoding unit 111. Based on a process result, an ACK/NACK signal is generated at an ACK/NACK generating unit 112. The OFDM mapping unit 106 maps the ACK/NACK signal to an appropriate location.

At the terminal 200, a CCE-number determining unit 202 determines the signal received at a receiving unit 201 as an existence candidate position of the CCE (that is, CEU). Based on the information, a control-signal decoding/detecting unit 203 decodes/detects the control signal destined for itself from the control signal area. In a case of detection, if the downlink allocation information is detected, a data decoding operation at a demodulating/decoding unit 204 is instructed, and if the uplink allocation information is detected, a control unit 205 is notified A result, processed at the demodulating/decoding unit 204 is notified to an ACK/NACK generating unit 206 at which the ACK/NACK signal is generated. At the controller, an encoding/modulating technique for an upstream data transmission is instructed to a data encoding/modulating unit 207.
As described above, each terminal is notified in advance of a plurality of control channel candidates to be received from the network side (the candidates are probably different depending on each terminal). Fig. 2 depicts the state of notification. The receiving unit 201 and the control-signal decoding/detecting unit 203 are a receiving unit and a detecting unit, respectively in the present invention, and respective operations are a receiving step and a detecting step.

Further, upstream data is accumulated in a buffer unit 208. An allocation requesting unit 209 determines the transmission necessity of a resource allocation request from a data accumulating situation and a current uplink allocating situation. A signal multiplexing/selecting unit 210 selects any one of or multiplexes a plurality of the encoded data signal, the ACK/NACK signal, the resource allocation request signal, and line-quality information from a downstream-quality measuring unit 211, and transmits the same item from a transmitting unit 212.

Explanations of the first embodiment have exemplified a case of 12 subcarriers during the use of the one OFDM symbol, six subcarriers during the use of the two OFDM symbols, and three subcarriers during the use of the three OFDM symbols. However, the combination of the number of OFDM symbols to be used and the number of subcarrier is not limited thereto. For example, it is possible to adopt 24 subcarriers during the use of the one OFDM symbol, 12 subcarriers during the use of the two OFDM symbols, and six subcarriers during the use of the three OFDM symbols. As long as the conditions (1) and (2) are satisfied, other combinations can be made. This configuration also applies to other embodiments.

As a basic operation, the first embodiment has described a content that complies with a wireless communication method for which a standardizing task is currently performed under the name of LTE (Long Term Evolution) in 3GPP (3rd Generation Partnership Project), which is a standards body. However, a communication method having contents other than this can also be applied.

Moreover, while the first embodiment has described an example in which the OFDMA system is used, the present invention is not limited to the OFDMA system, and other transmission systems, which are two-dimensionally defined by a frequency axis direction and a time axis direction, can be used.

Second embodiment.
While the first embodiment has described a relation between the number of subcarriers of one control element unit (CEU) and the number of OFDM symbols, a second embodiment describes an example in which numbers of modulation symbols used for transmitting the control signal between differently shaped control element units are matched.
In the following explanations, a position of one modulation symbol is expressed by (X, Y), where an X direction denotes a frequency axis direction and a Y direction denotes a time axis direction in Fig. 1 or the like. For example, a position of R1 at the topmost leftmost in Fig. 1 is (1, 1), and R2 below that is (1, 2).

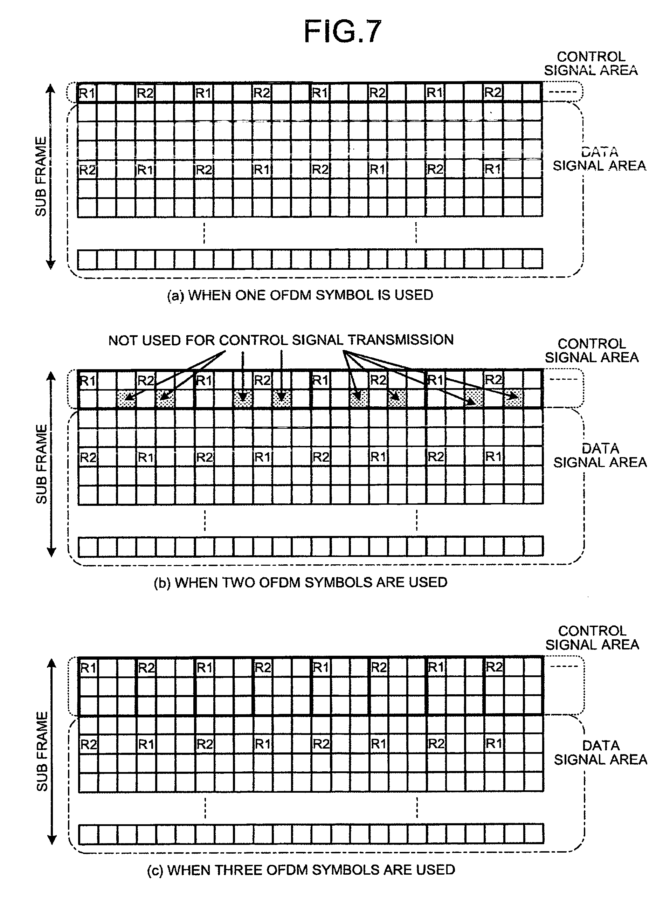

Fig. 7 depicts a case of three types of control element units described in the first embodiment, that is, (a) 1 OFDM symbol × 12 subcarriers, (b) 2 OFDM symbols × 6 subcarriers, and (c) 3 OFDM symbols × 3 subcarriers. In (a) to (c), there is shown an example in which (3) The number of modulation symbols used for the control signal transmission is matched to the number of cases that the number of modulation symbols is the smallest, and an excessive modulation symbol is not used for the control signal transmission (unused modulation symbol is called non-transmission modulation symbol), and
(4) A modulation symbol as far as possible from reference signal or non-transmission modulation symbol not used for the control signal transmission is selected.

In this case, a "distance" between the two modulation symbols is defined as a "value when the number of modulation symbols is counted in a frequency direction (subcarrier direction) and a time direction (OFDM symbol direction) from one modulation symbol to the other modulation symbol (no counting can be made in oblique directions)". When the value is larger, the two modulation symbols are "farther". In other words, when positions of the two modulation symbols are at (X1, Y1) and (X2, Y2), respectively, a distance L of the two modulation symbols is defined by: L=|X1-X2|+|Y1-Y2|. When L is larger, the distance is "farther".

In Fig. 7, it is assumed that the number of transmitting antennas at the base station is two. In this example, in the three cases of the number of OFDM symbols to be used, the number of modulation symbols for the control signal (a) during the use of one OFDM symbol and (c) during the use of three OFDM symbols is eight, that is, the minimum. Corresponding to this number, (b) during the use of two OFDM symbols, the two modulation symbols are not used for the control signal transmission. Moreover, the two unused modulation symbols each select a location farthest from the reference signal. In the leftmost control clement unit (CEU), the modulation symbols at (3, 2) and (5, 2) are non-transmission modulation symbols. In each of the two modulation symbols, a distance from R2 of the same CEU is 2. In this case, even at the position (2, 2), the distance from R1 is 2 and even at the position (6, 2), the distance from R1 of the adjacent CEU is also 2, and thus these modulation symbols can be the non-transmission modulation symbol. In the modulation symbols at (1, 2) or (4, 2) other than these or the modulation symbols at positions of X=2, 3, 5, and 6 and Y=1, each distance from R1 or R2 is all "1".

By implementing the (3), the number of CEUs configuring the CCE becomes the same all the time irrespective of the number of OFDM symbols to be used, and thus a receiving process at each terminal is facilitated. Moreover, when the (4) is implemented, an effect of prevention of deterioration of a demodulation performance is provided. Generally, the transmission channels for the other modulation symbols are estimated by using an estimate value of a transmission channel change obtained when receiving the reference signal. Thus, an estimation error about the modulation symbol far from the reference signal becomes larger, and as a result, the demodulation performance is deteriorated. Accordingly, implementing the (4) is very important in terms of not deteriorating the modulation performance.

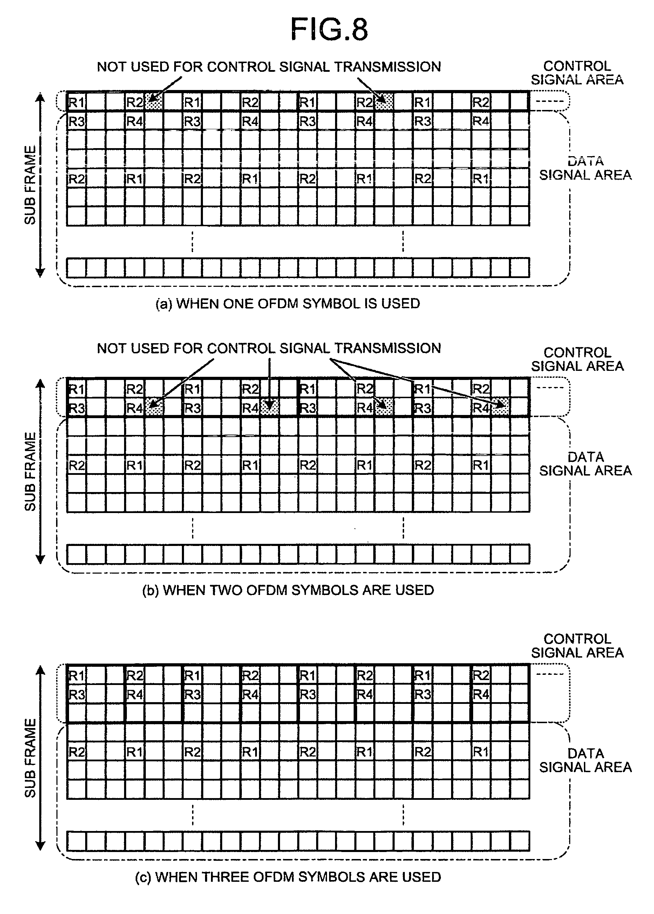

Fig. 8 is the same as Fig. 7 except that the number of transmitting antennas at the base station is assumed to be four. In an example of Fig. 8, out of three cases of the number of OFDM symbols to be used, the number of modulation symbols during the use of the three OFDM symbols is seven, that is, the minimum. Corresponding to this number, one modulation symbol is not to be used for the control signal transmission during the use of the one OFDM symbol and during the use of the two OFDM symbols. In the example of the use of the one OFDM symbol in Fig. 8(a), the modulation symbols other than any reference signal (R1 or R2) share the same distance, 1, from the reference signal (R1 or R2), and thus the modulation symbols other than that at (5, 1) can be selected for the non-transmission modulation symbol. Also in the example of the use of the two OFDM symbols in Fig. 8(b), the modulation symbols other than any reference signals (R1 to R4) share the same distance, 1, from the reference signal (any one of R1 to R4). However, R3 or R4 has a low existence density in the one subframe and the accuracy for the transmission channel estimation tends to deteriorate, and thus the modulation symbols having high dependency on R3 or R4 and capable of securing a distance of 2 from R1 or R2 are selected as the non-transmission modulation symbol. It is obvious that the modulation symbols having X=2, 3, and 6 and Y=2 can be used for the non-transmission modulation symbol.

In Fig. 7 and Fig. 8, depending on the number of transmitting antennas at the base station, the number of modulation symbols used for the control signal transmission is changed. Another example can include a method in which regardless the number of actual transmitting antennas, every possible number of antennas and the number of OFDM symbols to be used are considered, and among these numbers, values with which the number of modulation symbols is minimized are uniformly adopted as the number of modulation symbols used for the control signal transmission. In this case, the number of CEUs configuring the CCE is the same all the time irrespective not only of the number of OFNM symbols to be used but also of the numbers of antennas, and thus the receiving process at each terminal is further facilitated.

The selection of the non-transmission modulation symbol in the above explanations is performed at the OFDM mapping unit 106 shown in Fig. 6.

Further, it is necessary to feed back whether the upstream data transmission is correctly received, to the terminal from the base station. That is the ACK/NACK signal. In the present embodiment, the non-transmission modulation symbol not used for the control signal transmission can be used for the ACK/NACK signal transmission. In this case, it is not necessary to use another frequency region for the ACK/NACK signal transmission, and thus an effect of effectively utilizing a frequency band is achieved.

### Third embodiment.

The first and second embodiments have described an example in which a plurality of control element units (CEUs) configuring the control channel element (CCE) exist in the same time zone (the same OFDM symbol is occupied). The third embodiment describes an example in which the definition of the CEU is different from those in the first and second embodiments and there include some of a plurality of CEUs configuring the CCE existing in different time zones.

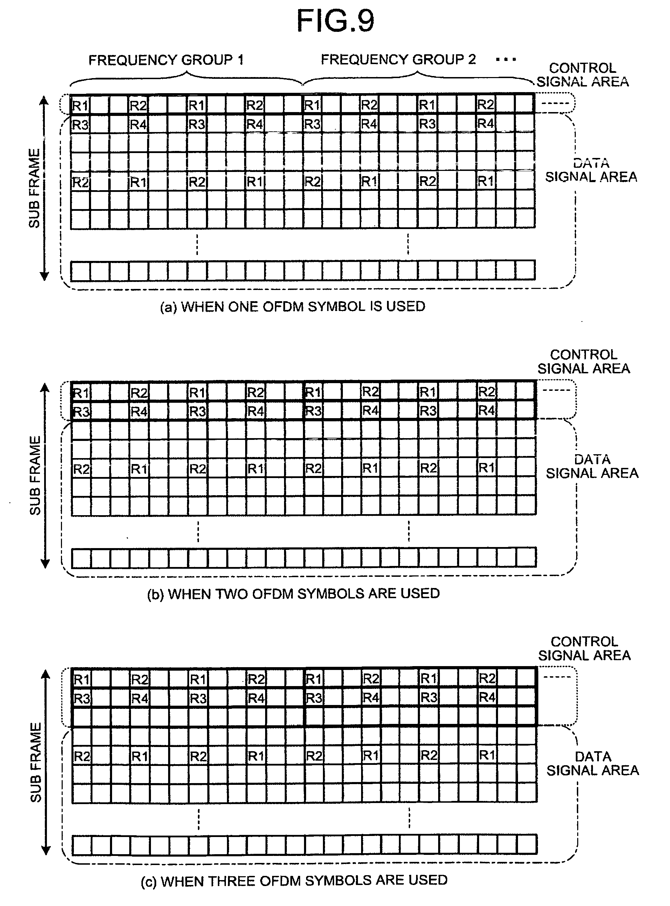

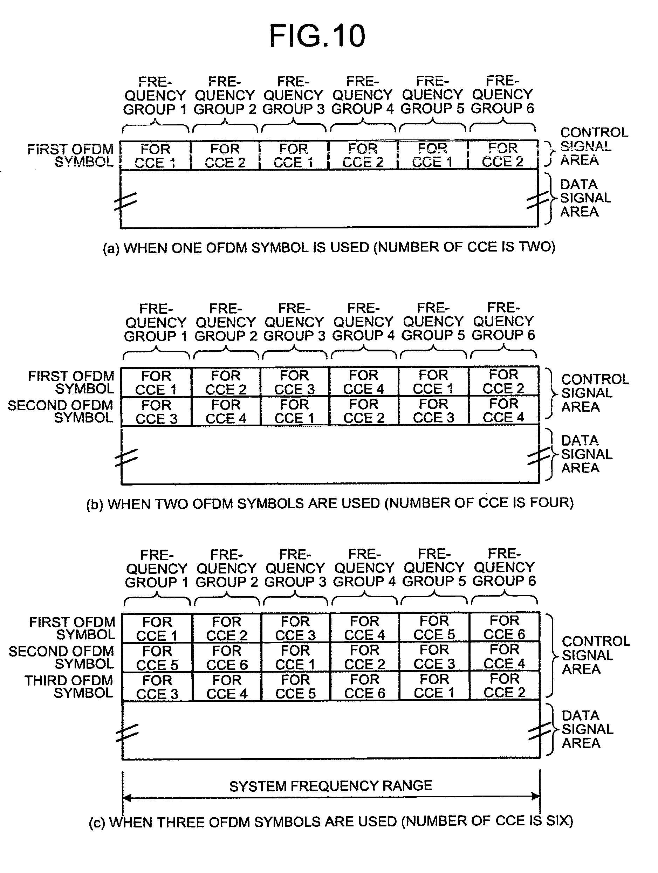

Fig. 9 is a definition example of CEUs, which re different from those shown in Fig. 5 (each bold frame indicates one CEU). In the example of Fig. 9, the definition for the CEU (a) during the use of the one OFDM symbol is inherited also to (b) and (c) during the use of the two OFDM symbols and three OFDM symbols, and the CEU of the same shape is repeated in the time axis direction (OFDM symbol direction). Fig. 10 is a configuration example of the control channel element (CCE) based on the definition example of CEU shown in Fig. 9. To configure one CCE by collecting a plurality of CEUs having a different frequency, the CEUs existing at different time axes are selected for (b) during the use of the two OFDM symbols or (c) during the use of the three OFDM symbols. In Fig. 10, for example, (c) is a case of the number of CCEs is six, and these CCEs are called CCE1 to CCE6. The CEU applied to the CCE1 is displayed with "for CCE1". The same applies to (a) and (b).

Specifically, in a case of the use of the three OFDM symbols in Fig. 10(c), the positions of the CEUs (for CCEls) configuring the CCE1 are at (first OFDM symbol, frequency group 1), (second OFDM symbol, frequency group 3), and (third OFDM symbol, frequency group 5). A group of CEUs configuring another CCE5 is composed of (second OFDM symbol, frequency group 1), (third OFDM symbol, frequency group 3), and (first OFDM symbol, frequency group 5).

In the second OFDM symbol in Fig. 10(b), the first OFDM symbol is finished with "for CCE2", and thus "for CCE3" is allocated to the frequency group 1. The second and third OFDM symbols in Fig. 10(c) are obtained as follows: the positions of the CCE1 are shifted to right by the two CEUs and four CEUs, respectively, from the CEU alignment in the first OFDM symbol. Fig. 10 is an example in which each CCE is configured by three CEUs. Note that the number of CEUs configuring the CCE is previously decided.

As described above, the demodulation performance of the modulation symbol depends upon the distance from the reference signal. When only the CEUs positioned at the third OFDM symbol are collected to configure the CCE, the receiving quality greatly differs from the receiving quality provided by the CCE configured by collecting only the CEUs positioned at the first OFDM symbol. Accordingly, by using a CCE configuring method shown with reference to Figs. 9 and 10, an effect of making the receiving quality between the CCEs equal can be obtained. In this case, a method of acquiring the equal receiving quality by collecting a plurality of different frequencies and different time units is described as a method of configuring the CCE from the CEU, and when the single CEU configures the single CCE, however, that method can also be applied as a method of configuring the single control channel from a plurality of CCEs.

The above embodiments have described a case that the number of subchannels of one frequency group is 12, the number of frequency groups is six, and a total number of subcarriers is 72. However, it is only an example, and the number of subcarriers changes depending on each system frequency range, and thus the number of subcarriers of one frequency group or the number of frequency groups can be set to any value other than that in the example.

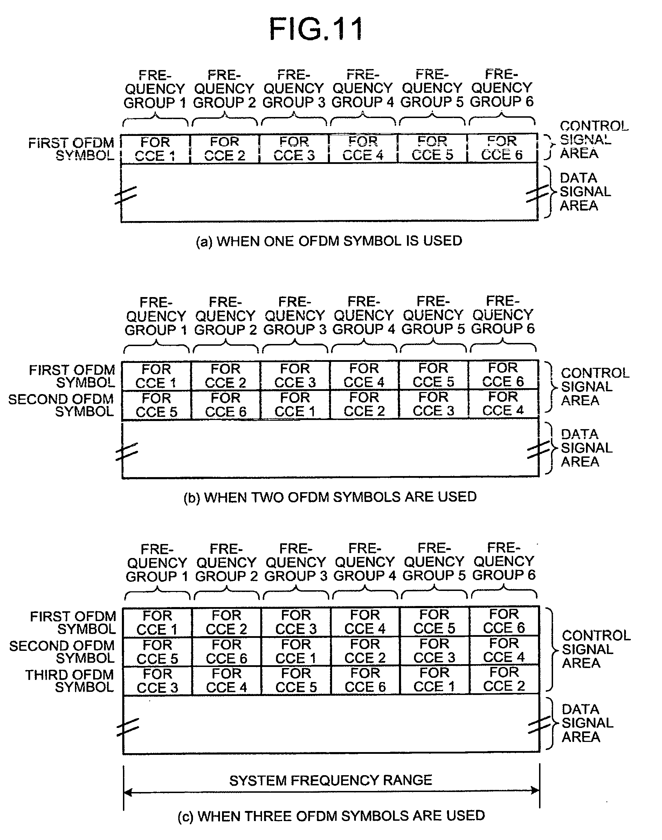

Fig. 11 is an example of arranging the six CCEs irrespective of the number of OFDM symbols to be used. The second OFDM symbols in (b) and (c) in Fig. 11 are obtained by shifting (circulating), by the two CEUs to right, the alignment of the CEUs of the first OFDM symbol. The third OFDM symbols in Fig. 11(c) are obtained by shifting (circulating), by the four CEUs to right, the alignment of the CEUs of the first OFDM symbol. In this case, each CEU of the first OFDM symbol is allocated to every CCE. As described in the first embodiment, the R3 or the R4 has a low existence density in one subframe, and thus the accuracy for transmission channel estimation tends to deteriorate. In the example of Fig. 11, the CEU of the first OFDM symbol including the R1 or the R2 that can easily secure the accuracy for transmission channel estimation is equally allocated to each CCE.

The decision of CCEs in the above explanation is made by the OFDM mapping unit 106 shown in Fig. 6.

Thus, in the present embodiment, the CEUs are repeatedly arranged at least in the frequency axis direction. By a plurality of CEUs at different positions on the frequency axis, the CCE as a second unit of the constituent element of the control channel is configured, and from a plurality of CCEs, the control channel corresponding to a specific terminal device is configured.

## Claims

1. A wireless communication system in which a base station notifies one or more terminal devices of a control signal for each subframe defined by a number of OFDM symbols that is a unit in a time axis direction and a number of subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe, the wireless communication system comprising:
a control-element-unit defining unit that defines, taking an integer F as an integral multiple of A, a control element unit that is a first unit of a constituent element of a control channel through which the base station transmits the control signal by T OFDM symbols and F subcarriers, and for a first combination of T and F, determines a second combination of T and F such that a number of modulation symbols included in the control element unit defined by the second combination is closest to a number of modulation symbols included in the control element unit defined by the first combination.

2. The wireless communication system according to claim 1, wherein
out of the modulation symbols included in the control element unit, a modulation symbol to which no pilot signal is allocated is set to an effective modulation symbol, and
the control-element defining unit determines the second combination such that a number of effective modulation symbols included in the control element unit defined by the second combination is closest to a number of effective modulation symbols included in the control element unit defined by the first combination.

3. The wireless communication system according to claim 2, wherein when the number of effective modulation symbols in the first combination and the number of effective modulation symbols in the second combination do not match, the element defining unit sets a required number of effective modulation symbols in a combination whichever has a larger number of effective modulation symbols as a non-transmission modulation symbol, that is not used for a signal transmission, thereby matching the numbers of effective modulation symbols in the first and second combinations.

4. The wireless communication system according to claim 3, wherein the element defining unit determines a position of the non-transmission modulation symbol as a position of a modulation symbol farthest from a pilot symbol to which a pilot signal is allocated.

5. The wireless communication system according to claim 1, wherein the element defining unit repeatedly arranges the control element units in the frequency axis direction, configures a control channel element that is a second unit of the constituent element of the control channel from a plurality of control element units, and configures a control channel corresponding to a specific terminal device from one or more of the control channel elements.

6. The wireless communication system according to claim 1, wherein
T=3 and F=3×N in the first combination of T and F, where N is a natural number, and
T=2 and F=6×N or T=1 and F=12×N in the second combination of T and F.

7. A wireless communication system in which a base station notifies one or more terminal devices of a control signal for each subframe defined by a number of OFDM symbols that is a unit in a time axis direction and a number of subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe, the wireless communication system comprising:
a control-element defining unit that defines, taking an integer F as an integral multiple of A, a control element unit that is a first unit of a constituent element of a control channel through which the base station transmits the control signal by a predetermined number of OFDM symbols and F subcarriers, repeatedly arranges defined control element units at least in a frequency axis direction, configures a control channel element that is a second unit of the constituent element of the control channel from a plurality of control element units at different positions on a frequency axis, and configures a control channel corresponding to a specific terminal device from the control channel elements.

8. A base station in a wireless communication system in which the base station notifies one or more terminal devices of a control signal for each subframe defined by a number of OFDM symbols that is a unit in a time axis direction and a number or subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe, the base station comprising:
a control-element-unit defining unit that defines, taking an integer F as an integral multiple of A, a control element unit that is a first unit of a constituent element of a control channel through which the base station transmits the control signal by T OFDM symbols and F subcarriers, and for a first combination of T and F, determines a second combination of T and F such that a number of modulation symbols included in the control element unit defined by the second combination is closest to a number of modulation symbols included in the control element unit defined by the first combination.

9. A terminal device in a wireless communication system in which a base station notifies one or more terminal devices of a control signal for each subframe defined by a number of OFDM symbols that is a unit in a time axis direction and a number of subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe, the terminal device comprising:
a receiving unit that receives a signal transmitted from the base station by defining, taking an integer F as an integral multiple of A, a control element unit that is a first unit of a constituent element of a control channel through which the base station transmits the control signal by T OFDM symbols and F subcarriers, determining a second combination of T and the F for a first combination of T and F such that a number of modulation symbols included in the control element unit defined by the second combination is closest to a number of modulation symbols included in the control element unit defined by the first combination, and repeatedly arranging the control element units in a frequency axis direction; and
a detecting unit that extracts a control channel element destined for the terminal device from received signal, and detects a control signal destined for the terminal device.

10. A wireless communication method used in a wireless communication system in which a base station notifies one or more terminal devices of a control signal for each subframe defined by a number of OFDM symbols that is a unit in a time axis direction and a number of subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe, the wireless communication method comprising:
a control-element-unit defining step of defining, taking an integer F as an integral multiple of A, a control element unit that is a first unit of a constituent element of a control channel through which the base station transmits the control signal by OFDM symbols and F subcarriers, and for a first combination of T and F, determining a second combination of T and F such that a number of modulation symbols included in the control element unit defined by the second combination is closest to a number of modulation symbols included in the control element unit defined by the first combination.

11. A wireless communication method used in a wireless communication system in which a base station notifies one or more terminal devices of a control signal for each subframe defined by a number of OFDM symbols that is a unit in a time axis direction and a number of subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe, the wireless communication method comprising:
a control-element defining step of defining, taking an integer F as an integral multiple of A, a control element unit that is a first unit of a constituent element of a control channel through which the base station transmits the control signal by a predetermined number of OFDM symbols and F subcarriers, repeatedly arranging defined control element units at least in a frequency axis direction, configuring a control channel element that is a second unit of the constituent element of the control channel from a plurality of control element units at different positions on a frequency axis, and configuring a control channel corresponding to a specific terminal device from the control channel elements.

12. A wireless communication method used in a base station in a wireless communication system in which the base station notifies one or more terminal devices of a control signal for each subframe defined by a number of OFDM symbols that is a unit in a time axis direction and a number of subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe, the wireless communication method comprising:
a control-element-unit defining step of defining, taking an integer F as an integral multiple of A, a control element unit that is a first unit of a constituent element of a control channel through which the base station transmits the control signal by T OFDM symbols and F subcarriers, and for a first combination of T and F, determining a second combination of T and F such that a number of modulation symbols included in the control element unit defined by the second combination is closest to a number of modulation symbols included in the control element unit defined by the first combination.

13. A wireless communication method used in a terminal device in a wireless communication system in which a base station notifies one or more terminal devices of a control signal for each subframe defined by a number of OFDM symbols that is a unit in a time axis direction and a number of subcarriers that is a unit in a frequency axis direction by using an orthogonal frequency division multiple access (OFDMA) system, and one modulation symbol is defined by one subcarrier and one OFDM symbol and a plurality of pilot signals used by the terminal device for estimating a state of a transmission channel between the terminal device and the base station are allocated in a predetermined subcarrier number cycle A for modulation symbols at identical positions in the time axis direction within a subframe, the wireless communication method comprising:
a receiving step of receiving a signal transmitted from the base station by defining, taking an integer F as an integral multiple of A, a control element unit that is a first unit of a constituent element of a control channel through which the base station transmits the control signal by T OFDM symbols and F subcarriers, determining a second combination of T and the F for a first combination of T and F such that a number of modulation symbols included in the control element unit defined by the second combination is closest to a number of modulation symbols included in the control element unit defined by the first combination, and repeatedly arranging the control element units in a frequency axis direction; and
a detecting step including
extracting a control channel element destined for the terminal device from received signal, and
detecting a control signal destined for the terminal device.
